# EUROPEAN PATENT APPLICATION

(11) **EP 1 094 042 A1**
(43) Date of publication of application: **25.04.2001**
(21) Application number: 99203473.6
(22) Date of filing: 22.10.1999
(51) Int. Cl.: C03C 25/18, B29C 70/52, B29B 15/12

(54) **Fiber impregnation with thermoplastic and thermoset polymers as liquids, as emulsion or suspension**

(71) Applicant: Art Trading Services SA, Cay Road Town, Tortola, Virgin Islands (GB)
(72) Inventor:
(74) Representative: Hoorweg, Petrus Nicolaas

(57) **Abstract**

The invention relates to a process for impregnating at least one non-twisted fiberstrand with a polymer, comprising the step of pulling the fiberstrand through a constriction of an open impregnation vessel containing a polymer impregnation agent thereby causing a pressure increase in the area of the constriction.

The invention further relates to the use of dried impregnated fibers or rovings and to a device for impregnating at least one non-twisted fiberstrand with a polymer substantially formed by an open vessel allowing the passage of at least a fiber strand and having a constriction in the form of a nozzle or a cone describing an angle of 10-45° with the vertical axis.

## Description

The invention relates to a process for rapid and cheap impregnation of fiber strands such as glassfiber strands or the like with thermoplastic and thermoset polymers in the form of liquids, emulsion or suspension. For glassfibers the process can take place straight under the bushing or in an off-line process.

Several processes are known to exist for combining polymers with glassfiber continuous strands or rovings. They all depend on using a straight polymer, in solid or molten form and involve fusion before they can be further used. Further, impregnation by fluidized bed methods are known to get the glassfibers impregnated with polymers like polyamides and polypropylene. It was however not economical in view of the low output and the high losses of polymer powder. The powder had to be fused onto the fiber at high temperature. Low tex input fiber was needed to achieve impregnation and low polymer pick up limited the use of said known methods.

Another known process for impregnating a glassfiber roving makes use of a crosshead extruder. This method was useful with molten polyamide mostly and in the more exclusive higher price polymers, but the core of the fiber still was often not impregnated. Both processes gave a product of higher mechanical properties, but cost was high and process wise they were complicated, with high losses of polymer and varying level of properties.

With the known fluidized process further, it was possible to run under the bushing. This removed a lot of the disadvantages as the cost went down. No more roving was necessary as in-between step as before. But the control of the fluidization, the oven heating after the consequent impregnation make the process very complicated, difficult to regulate and therefore costly.

A parallel idea of working under the bushing is known and consists of a parallel extrusion of polymer strands from an extruder and pulling glassfiber roving from a bushing. These are together wound up as a roving, dried and then used for - for example - winding, weaving or chopping. Again, temperatures are high because of the fiber/polymer fusion necessary to maintain integrity, plus the process gives a very coarse mix, there is no real intimate fiber/polymer mixing down to the filament. These impregnated fibers are used mainly for low property polymer applications indicating that the mechanical properties are limited. It is however estimated to be the most economical process as it can handle high tex rovings and production throughput is high. For producing chopped strands, the most common type of product used in the industry, this method needs to go through the intermediate process of making a roving, meaning extra cost and compromises on the size formulation, which has to allow chopping the roving up, while maintaining the integrity of the fiber/polymer mix.

All these known processes are aimed at higher mechanical properties, but are limited in use either by the difficult process, low throughput, limited viability in improving properties or by the cost of production. They all rely on fusion. Further, the high fusion temperature of 150-350°C complicates its process and increases cost.

The invention provides a simplified impregnation process overcoming said above difficulties according to claim 1.

The process, by its simplicity and by eliminating steps, which are necessary in actual processes in use, offers very good economics compared to the processes of today. It can use all polymers, thermoset and thermoplastics which are liquid or available in emulsion or suspension. It uses low temperatures, well below the normal ones used in mix processing polymers and fibers or for fusing the polymers onto the fibers.

Preferred embodiments of said process are defined in the subclaims 2-8.

The invention will hereunder be described with reference to its preferred embodiments and especially related to glassfiber strand(s) and roving(s).

A preferred embodiment of the invention is to pull individual glassfiber strands or rovings of any commercial tex like from 10 till up to 9600 tex or higher, which are coated with a size or not, through an open vessel or a container for liquids having a constriction preferably a conical device which ends as a nozzle. The cone is at least partially filled with a liquid polymer, a suspension or emulsion of such polymer, which is to impregnate the glassfiber fully and till the very center of it.

The impregnation process according to the invention is different from other processes in that the fiber strand or roving, by the high pulling speed of 5-400 and preferably 10-200 m/min builds up pressure while passing through the impregnation vessel. By this pressure building the liquid penetrates fully in the core and hence impregnates the fiber until the very individual filament. After the nozzle, the impregnated wet glassfiber is dried in an oven, then is wound up as a bobbin or chopped as a short chopped strand, like the industry uses today.

Rather than fusing, drying is usually sufficient as the polymer is really inside the roving or strand, not on the surface. This is important as the energy use is lower and the impregnated fiber keeps its flexibility, while a fused one becomes like a stick and can only chopped, not used in further processes, like weaving or similar, where the deformation is a key factor in the processing.

Alternatively, the wet fiber can be wound up and kept that way until in later processes it is transformed into a product and dried or fused for further use.

There is an overflow of polymer liquid agent after the nozzle as with all processes above, but in the invention the excess is not lost, as a liquid it is recovered and re-used. Only resin content of the recycled material is critical and must be controlled and adapted if necessary. This means, 100% recyclability is achieved and no waste stream is generated contrary to all the existing processes above.

By executing the process at a fiber producer, the process can start with spin cakes or direct rovings, products made preferably directly under the bushing or after the sizing applicator and hence the cheapest form of glassfiber. This allows the fiber producer to use only a polymer friendly size on the fiber without the need to consider the other properties, like for example run out after drying, which forces the producer today to make compromises on the mechanical property optimization. The method of the invention is therefore not limited to a separate use of the method, but can be an integral part of a production or upgrading process.

The invention allows to either dry the fiber or roving, or to fuse or polymerize it after drying directly onto the individual filament. This fused product is for many polymers like PP, PA, PET, PBT, PVC, PTFE, thermoset resins and other similar products a stiff, stick like product, which is chopped readily and ready to be moulded. The invention maintains total glass/polymer content control, down to the individual filaments of the fiber.

But the whole process can take place directly under the bushing, where the fiber is drawn. Contrary to the existing processes of fiber sizing, the sizing can be applied as part of the polymer solution and the whole process is comparable to the cost of glassfiber making, except of the extra cost of polymer addition. This is a further cost reduction and in view of the present efficiencies in drawing glassfiber continuously without interruption, a very attractive solution. The remaining polymer solution is recovered again as described above, contrary to the present sizing technology, which looses about 40-50% of the sizing during its application under the bushing.

The invention process form is therefore considerably better, environmentally cleaner and cheaper than any existing process.

As an example of the above process, the extra 3-15% coupling agent as used in the glassfiber polypropylene process in order to achieve the right mechanical properties can be mixed in the impregnation liquid and this ensures that the fiber is properly covered with it for later in the moulding stage.

After the impregnation, an in-line drying heater provides the integrity of further handling and packing. The ready fused or the dried product is ready for use at the final part injection or compression moulders, or to be delivered to blenders to add further polymer additives.

In case of using a microwave oven, the product is 100% dried and free from water, but as the heat does not exceed the 100°C and the effect is limited when the fiber is dry, the polymer is not fused on the filaments, just in a fine dispersion is caked on the surface, without fusion. This leaves the impregnated fiber or roving flexible, while having a product with polymer which is sufficiently adhered to the fiber without loosing it like in the powder impregnation processes, where total fusion is a must as the fiber is only outside of the fiber, not sufficiently entrapped and encapsulated inside. This unique possibility is new and allows new type of applications of the impregnated fiber. It allows the fiber to bend easily, as is required in a number of conversion processes. Examples are weaving, filament winding, pultrusion, extrusion or profiles, GMT moulding, compression and injection moulding.

When impregnated fibers with a defined fiber content and of defined length and direction are put in the mould, it is possible to mould them as such and achieve molded products with very well defined properties.

By combining these fibers with normal injection or compression moulding compounds, the invention products allow to achieve the desired property increase in defined positions of the moulded part, by placing and bending the impregnated fibers in the mould in a defined way. This is done but it is a process difficult to achieve with present known processes and products as the impregnated fibers are too stiff and cannot be easily placed in the mould, especially by automated ways. The invention process allows by the fiber flexibility to position the fiber with a robot around mould inserts. The remainder of the mould is then filled with the conventional moulding compound. This property definition is very useful for products like for the automotive industry or other high strength requiring applications. Reinforced plastics must increase their properties in view of the growing demands on the strength of the plastics, to reduce weight and material use.

By taking steps out of the manufacturing processes and by optimising product properties in the moulding processes, the cost is reduced, both for the initial impregnated rovings or chopped strands and for all the final moulding processes using the invention.

By the complete and integral impregnation, the fibers are protected from abrasion and properties like tensile, flexural and impact strength are increased over known solutions.

By offering a very versatile process that is suitable for most polymers, this process is much more versatile than other ones, which are only able to fulfill a limited area of types and applications of polymers.

By multiplying the number of impregnation positions, very high production rates are achievable. By using different polymers in different positions, the process allows to make different polymers in one installation in a very cheap and easy way.

This invention has been described for glassfibers, being the most widely used reinforcement material in the market. But it offers the same advantages to other fiber types, like aramids, thermoplastic polyesters, polyamides, carbon fibers or natural fibers like sisal. In case of fibers sensitive to abrasion, like carbon fiber or sisal, the absence of abrasion is a clear advantage and gives again much better mechanical properties than in existing technology.

As stated above, multiple fibers or rovings can be impregnated and dried together in one process. These fibers can be pulled together into a die, heated and fused to become a profile. Such processes are used in thermoset pultrusion, but the thermoplastic pultrusion has been problematic as the fiber/polymer mix is difficult to make. In the invention, the dried fibers are heated in the die and directly a low cost thermoplastics profile is made. There is a demand for such profiles in the building or transportation industry, where the actual thermoset profiles are too expensive and thermoplastic solutions have either low properties, or are far too high in cost.

By combining the fibers or rovings produced with the invention processes with the mat type GMT (glass mat thermoplastic) that has lower properties than the invention products, high strength products with a good cost basis are now possible to make.

The impregnated products can be woven on weaving machines, stitched into multiaxial weave fabrics or complexes on Malimo or Liba machines, or used in 3-dimensional weaving processes like Raschel or Mayer. Contrary to existing solutions, like the Twintex process, the invention gives fibers, which remain flexible, deformable, and without springback due to different polymer and/or fiber stiffness as is the case with fused fibers or with the Twintex process. This eases processing very much and allows the fibers to bend under sharp angles, without abrasion damage or de-mixing. Polymer and fiber rub-off is minimal in the invention; this filament breakage is a major problem in the weaving process today especially with brittle material as glassfiber and carbon fibers. The polymer acts as a protection and lubricant for the fiber.

The invention gives a pre-impregnated fabric or ) prepreg, ready to use in the mould. In the reinforced plastic industry, the development of such prepreg applications has been done, because the reduce the output of monomers like for example styrene, phenolics, epoxies or acrylics. The prepreg use reduces output into the environment. Typical examples ae large mouldings, like the train bodies, boats, aircrafts or windmill blades, where monomer loss is difficult to reduce. But the today prepreg preparation is cumbersome and therefore results in expensive products. This invention allows a cheap prepreg solution.

The process and the apparatus according to the preferred embodiments of the invention will be further elucidated by the following detailed description. This description is illustrated with several figures in which:
Figure 1 is a front schematic view of the process of the invention;

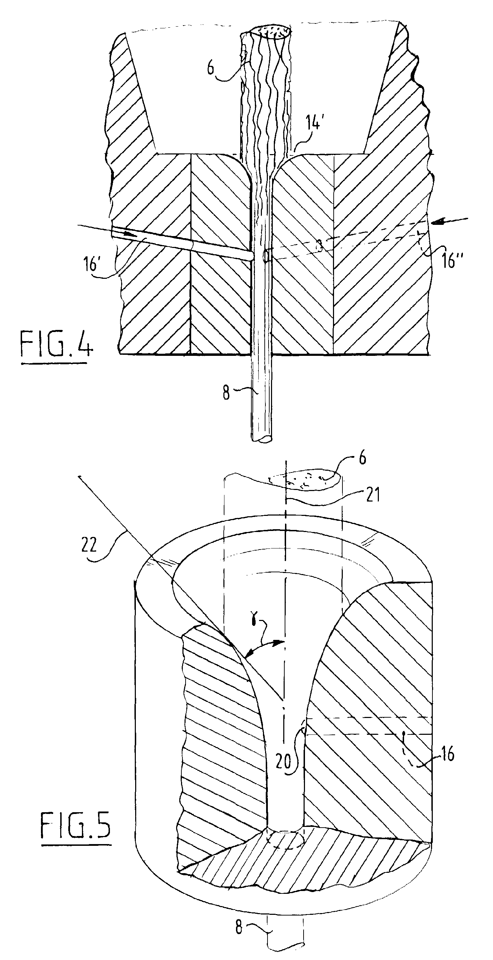

Figures 2-4 are cross-sectional views along the pulling direction of preferred embodiments of the impregnation apparatus; and
Figure 5 is a partial broken away perspective view of the embodiment shown in figure 2.

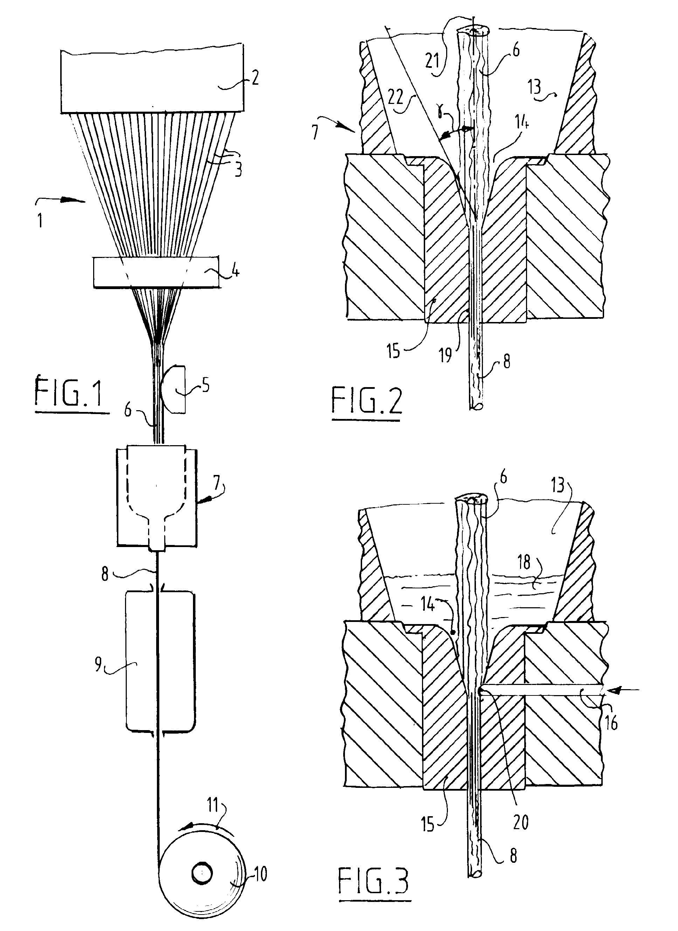

The process of the invention is elucidated by the apparatus chain 1 shown in figure 1. A bushing 2 or spinneret is heaten to maintain in a liquid state a supply of molten glass. On the bottom of the bushing 2 a large number of orifices are provided through which fiber filaments 3 of molten glass are discharged. Generally these strains of fiber filaments 3 are mechanically drawn to give rise to a continuous glass fiber strand. Sizing 4 is provided in a not obligatory way to provide optionally a coating on the strand. A number of strands is guided by a guiding shoe 5 to form a strand or a roving 6 which passes through the impregnation device 7 resulting in a fully impregnated strand or roving 8 which further can be heated by a heating or microwave apparatus 9 and then wound on bobbins of strands and rovings by pulling downwardly on the roll 10 according to arrow 11. Alternatively roll 10 can be replaced by a chopping device to give chopped strands.

The impregnation vessel 7 is provided with an open inlet 12 wherein a strand or a roving 8 containing a number of fiber filaments 3 is forced through a polymer impregnation bath and further downwardly through the open outlet 19 of the impregnation vessel 7. The constriction 14 in the passing channel body 15 provides a pressure increase and turbulence resulting in an impregnation of the roving 8. Body 15 can optionally be provided with channels 16, 16'and 16" for a supply under pressure to create an even higher turbulence or for the further supply of polymer impregnation agent resulting in a total impregnation of the roving 8. Usually the roving 8 or the fiber filaments 3 are pulled in a vertical direction parallel to the vertical axis 21 of the vessel 7. Experiments have shown that the angle α of the constriction area 14 of the impregnation vessel 7 is preferably an angle varying from 10-45° according to the vertical axis 21.

## Claims

1. Process for impregnating at least one non-twisted fiberstrand with a polymer, comprising the step of pulling the fiberstrand through a constriction of an open impregnation vessel containing a polymer impregnation agent thereby causing a pressure increase in the area of the constriction.

2. Process according to claim 1, wherein the fiberstrand is pulled in a substantial vertical direction, describing an angle less then 45° with the vertical axis.

3. Process according to claim 1 or 2, wherein the pulling speed is from 5-400 m/min and preferably 10-200 m/min.

4. Process according to any of claims 1-3, wherein additional lateral impregnation pressure is provided by a lateral supply of air or polymer impregnation agent towards the area of the constriction.

5. Process according to any of claims 1-4, wherein the impregnated fiberstrand is microwave dried.

6. Process according to any of claims 1-5, wherein the polymer in the polymer inpregnation agent is chosen from PP, PBT, PC, PPO derivatives, PPS, PE, PET, PA, PUR, silicones, fluoropolymers like PTFE, PVC, unsaturated polyester, epoxy, acrylic and phenolic resins.

7. Process according to any of claims 1-6, whereby the fiberstrand is a glassfiber strand or a glassfiber roving, aramid, carbon, thermoplastic polyester, polyamide, sisal or other natural fiber.

8. Process according to any of claims 1 or 3-7, for the impregnation of a glassfiber strand or glassfiber roving, whereby the impregnation is done directly after the glassfiber drawing under the bushing or under the sizing applicator or from spin cakes.

9. Process according to claim 8, wherein the pulling speed is from 10 to 100 m/sec.

10. Use of the dried impregnated fibers or rovings as under claims 1-9 by placing them in a mould in defined directions in order to obtain defined mechanical properties in mouldings, using the fiber flexibility in order to position them easily in the mould.

11. Device for impregnating at least one non-twisted fiberstrand with a polymer substantially formed by an open vessel allowing the passage of at least a fiber strand and having a constriction in the form of a nozzle or a cone describing an angle of 10-45° with the vertical axis.

12. Device according to claim 11, whereby in the area of the constriction lateral supply means in the form of a channel for pressured air and/or polymer impregnation agents.
